# EUROPEAN PATENT SPECIFICATION

(11) **EP 3 114 887 B1**
(45) Date of publication and mention of the grant of the patent: **04.09.2019**
(21) Application number: 15710455.5
(22) Date of filing: 05.03.2015
(51) Int. Cl.: H04W 48/14, H04W 48/16, H04W 84/12, H04W 48/20, H04W 76/10, H04W 48/18

(54) **DETERMINATION METHOD AND CORRESPONDING TERMINAL, COMPUTER PROGRAM PRODUCT AND STORAGE MEDIUM**
BESTIMMUNGSVERFAHREN UND ZUGEHÖRIGES ENDGERÄT, COMPUTERPROGRAMMPRODUKT UND SPEICHERMEDIUM
PROCÉDÉ DE DÉTERMINATION ET TERMINAL, PRODUIT DE PROGRAMME INFORMATIQUE ET SUPPORT DE STOCKAGE CORRESPONDANTS

(30) Priority: 07.03.2014 FR 1451874
(43) Date of publication of application: 11.01.2017
(73) Proprietor: InterDigital CE Patent Holdings, 75017 Paris (FR)
(72) Inventor: ALBERT, Frédéric, F-35576 Cesson-Sévigné (FR); JEANNE, Ludovic, F-35576 Cesson-Sévigné (FR); COLMAGRO, Jean-Claude, F-35576 Cesson-Sévigné (FR)
(74) Representative: Tarquis-Guillou, Anne
(86) International application number: PCT/EP2015/054680
(87) International publication number: WO 2015/132362

(56) References cited:
- WO-A1-2009/043048
- WO-A1-2011/110108
- WO-A2-2008/008987
- US-A1- 2005 148 332

## Description

### 1. Field of the present disclosure

The field of the present disclosure relates to communication networks, notably to local networks such as home networks, and to their access by wireless terminals.

A determination method for determining an access point to be used by a communication terminal for accessing a wireless communication network, and a corresponding communication terminal are described. In particular, the disclosed method and communication terminal can relate to a wireless communication network using a standard wireless communication protocol, such as the WIFI protocol.

### 2. Prior art

A communication network is often accessible, for a wireless terminal, from several access points. For example, in a local network, an access point to the home network can be present in a gateway device for interconnection with a remote network. Access points to the local network can also be present in several local devices, thus playing the role of repeaters (for example a device of "WIFI extender" type in the case of a network of WIFI type). It may for example involve local mobile devices such as a smartphone, or a tablet, or a decoder (or set-top box).

Moreover, in addition to giving access to the broadband network to the terminals which are members of a local network, a gateway device can often give access to the broadband network to which it is connected to devices external to the local network. It thus has two distinct identifiers: a private identifier (for example an identifier of private SSID type) reserved for the terminals which are members of the local network and a public identifier (for example an identifier of public SSID type), accessible to terminals which are members of the broadband network, even if they are not members of the local network. It can therefore be seen by other terminals of the local network as two different access points.

A terminal of a wireless network can detect the presence of several access points. It may involve access points in its neighborhood not belonging to its network or access points to its network.

As a result, when a terminal performs a search of the access points to a wireless network present in its neighborhood, it may detect several access points.

Moreover, the access points can vary over time (for example because some correspond to a mobile terminal) or according to the location of the terminal.

Currently, the user of a communication terminal is obliged to select himself, manually, the access point to be used for the connection of his terminal to the network. This selection is made especially difficult and tedious as the number of access points detected is large and the naming of the access points is unclear for the user. Finally, the association of a terminal with an access point can also be dependent on the prior entry of access keys (login and password for example).

WO2008 008987 discloses an apparatus performing multiple scan iterations to detect for access points and to identify candidate access points for association based on results of the multiple scan iterations. A list of access points candidates is made based on signal strength.

WO2009 043048 discloses a method for selection of access point based on network performance associated with the scanned access points.

US2005 01488332 discloses an apparatus, and an associated method, for facilitating selection of with which wireless local area network, or other network, that a mobile node should attempt to communicate. A plurality of listings is maintained at storage entities embodied at, or otherwise accessible by, a mobile node. The listings are accessed, in sequence, and entries contained in the listings are compared with networks in whose coverage areas that the mobile node is positioned. Communications are attempted to be effectuated, if possible, with networks in whose coverage area that the mobile node is positioned and whose identities are stored at the first-access listing. The listings stored by the mobile terminal contain identifiers of the networks (SSID), which are compared to the ones present in broadcast messages received by the terminal when scanning the channels.

WO2011 110108 discloses a method comprising: a mobile terminal obtaining wireless local area network (WLAN) information including the WLAN access point gateway IP address in a public network; the mobile terminal forwarding the WLAN information to the base station, the base station providing based on and in response to this WLAN information activation of the mobile station to use the WLAN access point.

### 3. Summary.

The present disclosure makes it possible to improve the situation by proposing an easier and quicker method for a user of a terminal than the solutions of the prior art.

More specifically, the present disclosure relates to a method according to claim 1.

According to a particular characteristic, said first network is a wireless communication network of Wifi type.

Although not explicitly described, the embodiments presented can be implemented using any combination or sub-combination.

Other embodiments, easily conceivable by those skilled in the art on reading the present description, are also included within the scope of the present disclosure.

In particular, the present disclosure applies to any wireless network using a communication protocol known to the terminal and notably to a standard wireless communication protocol, such as the Bluetooth protocol for example or the WIFI protocol in the case of a local network.

According to another aspect, the present disclosure relates to a communication terminal according to claim 6.

According to another aspect, the present disclosure relates to a computer program product according to claim 14. According to the present disclosure, such a computer program product comprises program code instructions for executing the above determination method, in any one of the aforementioned embodiments, when said program is executed by a computer.

According to yet another aspect, the present disclosure relates to a computer-readable storage medium according to claim 15.

Such a computer-readable storage medium can take the form of a computer program product loaded onto at least one computer-readable storage medium comprising computer-readable and computer-executable program code instructions.

Thus, in the present patent application, a computer-readable storage medium is considered as being a non-transitory storage medium having the intrinsic capacity to store information and the intrinsic capacity to enable a restitution of the information which it stores. A computer-readable storage medium can be for example, but not only, a system, a device or an item of equipment which is electronic, magnetic, optical, electromagnetic or infra-red, made of semiconductors or implements a combination of the techniques previously mentioned. It should be underlined that the following elements, which provide more specific examples of computer-readable storage media to which the principles of the present disclosure can be applied, are essentially mentioned for illustrative purposes and in no case constitute an exhaustive list, as will be easily interpreted by those skilled in the art: a portable computer diskette, a hardware disc, a memory of ROM (Read Only Memory) type, an erasable memory of EPROM (Erasable Programmable Read Only Memory) type or flash memory, a portable compact disc comprising a ROM memory (CD ROM), an item of optical storage equipment, an item of magnetic storage equipment, or any suitable combination of the preceding elements.

As would be easily understandable for those skilled in the art, the aspects of the present invention can be implemented by a terminal, a method, or a computer-readable storage medium. Thus, aspects of the present invention can be implemented in certain embodiments in the form of entirely hardware components (for example an electronic component or an electronic card equipped with components), or in the form of entirely software components (including for example firmware components, a "resident" software program, microcode, etc.). Other embodiments can implement both hardware components and software components. In the present document, the term "module" will generally designate a component which can correspond either to a hardware component or to a software component. Moreover, aspects of the present invention can be implemented in the form of a computer-readable storage medium. Any combination of one or more computer-readable storage media can be used.

### 4. List of figures

The present disclosure will be better understood, and other specific features and advantages will emerge upon reading the following detailed description, relating to a particular embodiment, the description making reference to the annexed drawings wherein:
- **Figure 1** shows the environment of a mobile communication terminal seeking to connect to a local network, according to a particular embodiment.
- **Figure 2** is a functional diagram showing the determination method of the present disclosure, in a particular embodiment, compatible with an implementation in the communication terminal described in relation to figure 1;
- **Figure 3** shows the determination module of a communication terminal according to a particular embodiment.

A same element is designated in all the figures by the same reference symbol.

The figures shown are for illustrative purposes only and in no case limit the present disclosure to the embodiments shown.

### 5. Description of embodiments

The general principle of the present disclosure consists in performing a filtering of the access points which it is possible for a terminal to select according to whether or not they belong to a determined network.

Thus, the present disclosure can make it possible notably to avoid wasting time and to avoid unnecessary consumption of power testing the performance of access points which do not allow access to the network.

In particular, some embodiments adapted notably to a mobile device can enable the terminal to automatically scan all the access points which surround it, in order to select and/or connect to the access point to the network offering, for example, the best quality in terms of performance. This is especially useful in the case of a mobile terminal, caused to be in the neighborhood of different access points while being moved.

Thus, at least one embodiment can make it possible to limit the selection of the access point to be used by a terminal to only access points belonging to the network which it wishes to access, instead of including in the selection all the access points visible by the communication terminal. In fact, testing a connection by an access point visible to the terminal but not belonging to the network constitutes a waste of time and unnecessary consumption of power. However, minimizing power consumption is a major constraint for a mobile terminal.

At least one embodiment can make it possible to compare the access points more efficiently, since only the access points belonging to the network will be evaluated. This is especially important when the selection is performed regularly, for example because the terminal to be connected is moved, or the access points to the network vary (for example because some access points are located on a mobile terminal).

Moreover, in some embodiments, for example embodiments wherein the encryption keys for connection to an access point are stored by the terminal, and wherein the selection criteria are predefined (for example a reception performance criterion), the choice of the access point to be used can be automated and not require interaction with a user of the terminal.

Moreover, due to this automation, it may be possible, without burdening the user, to regularly test certain access points to the network, for example all the access points within its range.

The user can thus benefit at any moment from the access point whose performance is best from among the access point available in the network.

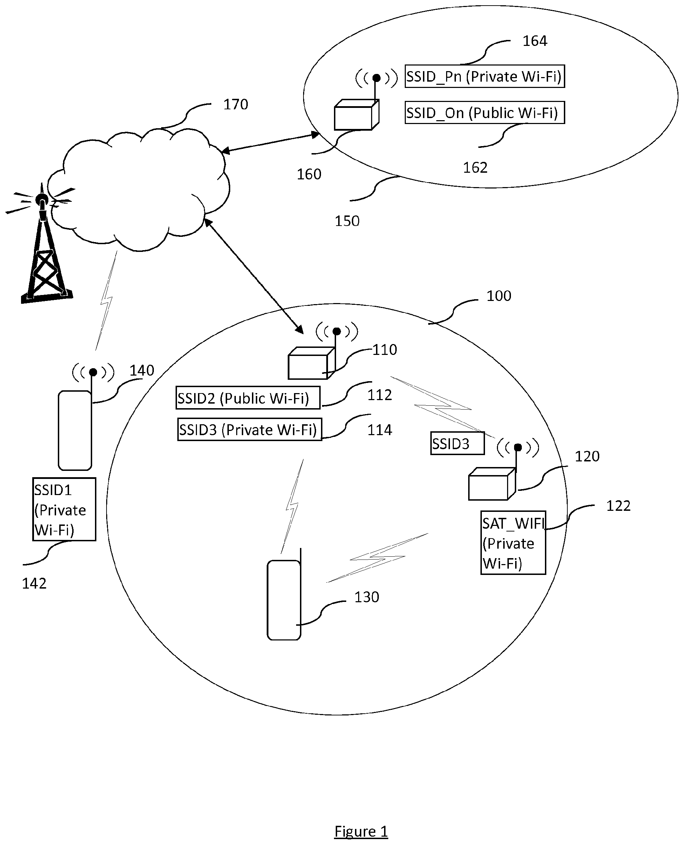

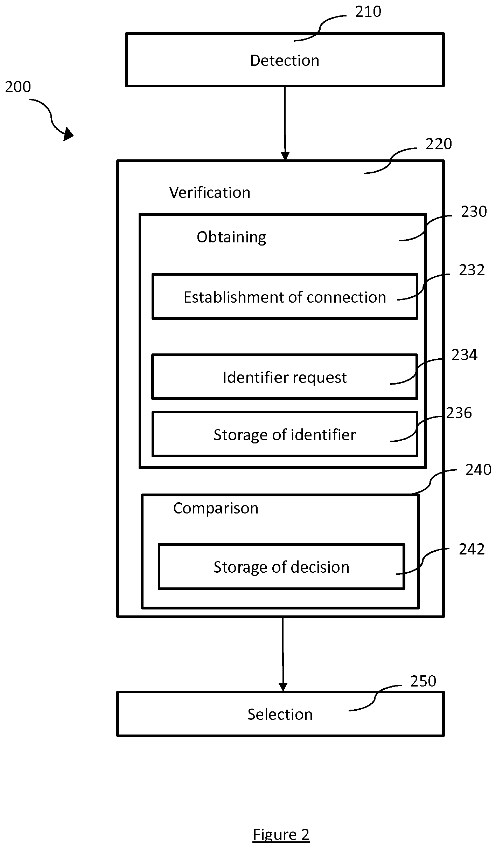

In relation to figures 1 and 2, a particular embodiment is presented in the context of a local network of WIFI type which a mobile terminal 130 wishes to access, using the determination method of the present disclosure. In the embodiment shown, the local network implements the standard communication protocol IEE 802.11 - 2012 (of 29 March 2012).

Figure 1 shows the environment of the mobile communication terminal 130. Figure 1 shows a local network of WIFI type 100, connected to a broadband network 170, for example a network of an internet access provider, by a gateway device 110, equipped with a WIFI card, having on one hand a public access point 112 and on the other hand a private access point 114 reserved for members of the local network 100. A decoder 120 (or set-top box), also equipped with a WIFI card, comprises on one hand a WIFI client, which enables it to communicate with the private access point 114 of the gateway device 110, and on the other hand a private access point 122, which enables it to play a role of repeater between the gateway device 110 and a terminal wishing to connect to the local network 100. The gateway device 110 and the decoder 120 are visible to the terminal 130.

Figure 1 also shows another local network of WIFI type 150, located in the neighbourhood of the local network 100, and accessible from a gateway device 160 having on one hand a public access point 162 and on the other hand a private access point 164 reserved for members of the local network 150. The gateway device 160 is located in the coverage area of the terminal 130.

Finally, another device 140, located in the coverage area of the terminal 130, comprises a private WIFI access point 142 to a GSM (global system monitoring) network.

In the embodiment shown, where the network is a local network of WIFI type, each access point is identified by a string of alphanumeric characters, such as a SSID (service set identifier). It can also be identified for example by a MAC (media access control) address, which makes it possible to guarantee a unique identification of each access point.

Figure 2 shows the determination method of the present disclosure, in a particular embodiment, implemented in the terminal 130.

According to the present disclosure, the method for determining 200 the access point to be used comprises a step 210 of detection by the terminal 130 of the access points in its neighborhood.

In the particular embodiment shown in figure 1, the terminal 130 thus sees six access points:
- The public and private access point 162 and 164 of the device 160 (giving access to the network 150);
- The public and private access point 112 and 114 of the gateway device 110 (giving access to the network 100);
- The private access point 122 of the decoder 120;
- The private access point 142 of the mobile terminal 140.

In the embodiment shown in figure 2, the method then comprises a verification 220 of the belonging of at least one of the detected access points (called access point to be verified) to the local network. This verification can for example correspond to an allocation of a particular value to a belonging indicator stored at least temporarily by the terminal, as discussed in more detail below.

According to the embodiments, the verification 220 can be conducted for each of the detected access points 112, 114, 162, 164, 122 and 142 or only for certain detected access points, for example for the access points detected for the first time by the terminal 130. Such an embodiment is particularly suitable when the determination method is implemented periodically by the terminal 130.

In particular, the verification 220 can comprise an obtaining 230 of an addressing identifier of the access point to be verified on a broadband network.

In the particular embodiment shown, the addressing identifier is a public IP (internet protocol) address enabling the unique designation of an interface with a network using the internet protocol. Such an address can for example be assigned by a provider of access to a broadband communication network, for example via a DHCP (dynamic host configuration protocol) server.

The gateway device 110 has two interfaces to the broadband network (a so-called "private" interface reserved for the interconnections between the broadband network and the devices of the local network, via the intermediary of the private access point 114, and an interface of "hot spot" type, that is to say which can be used by all the terminals using the services of the access provider, via the intermediary of the public access point 112). Each of the interfaces of the gateway device 110 is identified by a different public address.

Each device which uses an interface of the gateway device 110 to interface with the broadband network will be seen as having as its public addressing identifier the addressing identifier of the interface of the gateway device which it uses.

The addressing information of an access point to be verified can for example be obtained from a server external to the network, for example a remote server in the particular embodiment shown. In the embodiment shown in figure 2, the obtaining 230 of the addressing information thus comprises an establishment of a connection 232 between the terminal 130 and the access point to be verified, on the initiative of the terminal 130. This step can possibly require the provision of an encryption key, such as a WEP (wired equivalent privacy) or WAP (Wi-Fi protected access) or WAP2 key.

Thus, in the embodiment shown in figure 1, the connection of the terminal 130 with the access point 142 can fail, due to the absence of provision of a particular encryption key. In some embodiments, the failure of a connection of the terminal with an access point to be verified (for example the access point 122 of figure 1) can result in the verified access point being considered as not belonging to the local network.

When a connection is established, the terminal 130 can then communicate, via the intermediary of an access point, with devices accessible on the broadband network. As shown in figure 2, the method can thus in particular comprise an access to a server external to the network, for a request to provide 234 the addressing identifier of the access point to be verified.

For example, it may involve the transmission of a request providing in return the public IP address of the device connected to the public internet network which transmitted the request, that is to say, in the embodiment shown in figure 1, the gateway 110.

In some embodiments, as shown in figure 2, the obtaining 230 of an addressing identifier can also comprise a storage 236 of the obtained addressing identifier.

For example, it may involve a storage, in a look-up table of the terminal, of the addressing identifier (for example a public IP address in the embodiment shown) in connection with an identifier of the access point (for example a SSID identifier in the embodiment shown or a MAC address).

Such an embodiment offers the advantage of enabling a subsequent obtaining of the addressing identifier associated with an access point without interrogation of a remote server, said obtaining therefore being quicker.

The embodiment shown then comprises a comparison 240 of the addressing identifier with at least one reference addressing identifier, associated with the local network. Such a reference addressing identifier can notably be the addressing identifier of the "private" interface for interconnection between the local network 101 and the broadband network of the gateway device 110. Such an identifier can for example be entered by a user of the terminal during a prior configuration, or be obtained beforehand or dynamically by interrogation of a remote server via the intermediary of a reference access point, known to the terminal as belonging to the local network, for example the private access point 114 of the gateway device 110. It can also be obtained from the terminal by near-field communication, when the terminal 130 is brought near to a gateway device 110.

In other embodiments, a comparison 240 with several reference identifiers can be performed. This can be the case for example in network configurations where several gateway devices enable an interconnection between the network of the terminal and another network, for example a broadband network.

The comparison 240 between the addressing identifier of the access point to be verified and a reference identifier results for example in an allocation of a particular value to a belonging indicator stored at least temporarily by the terminal, as discussed in more detail below.

Thus, with reference to figure 1, the addressing identifiers of the access points 162 and 164 (relating to the interfaces of the gateway device 160 with the network 150) will be different from the reference addressing identifier associated with the access point 114.

Likewise, the addressing identifier of the "public" access point 112 to the broadband network from the gateway device 110 will also be different from this reference addressing identifier.

As a result, the addressing identifiers being different from the reference addressing identifier, the access points 112, 162, 164 will be considered as not belonging to the local network.

In some embodiments, the verification 220 of the belonging to the local network can comprise a storage 242 of the belonging decision.

Thus, it may involve a storage, in a particular table, of all the identifiers of the access points considered as belonging to the local network (for example in the form of a list of SSIDs or MAC addresses). In such an embodiment, the indicator of belonging to the network of an access point will be the presence in the stored list of the identifier relating to the access point.

It may also involve a storage in a look-up table, for each detected access point, of an item of information, coded on at least one bit, representative of the result of the belonging verification. For example, in some embodiments, it may involve an item of information coded on two bits, a first bit indicating the allocation of a significant value, relative to at least one belonging verification, to the second bit, and the second bit, constituting a belonging indicator, being representative of the result of the belonging verification. For example, a value "1" allocated to the belonging indicator can indicate a belonging to the local network and a value "0" allocated to the belonging indicator can indicate a non-belonging to the network (or vice-versa). Such an embodiment makes it possible for example to attempt to obtain again the addressing identifier of an access point when a first connection to another network, for example a wide area network in the case of the embodiment shown in figure 2, by this access point has failed.

In other embodiments, it may also involve an item of information coded on more than two bits, being able to take several particular values, for example a first, initial value indicating the absence of verification relating to the access point, a second value, indicating a belonging of the access point to the network, a third value indicating a non-belonging of the access point to the network, other values indicating a failure of connection with the access point and/or the reason for the failure (in the case of absence a particular value can be allocated to the absence of provision of a required encryption key) and/or a current number of connection attempts.

In such an embodiment, when the verification is performed periodically, or when a same verification can comprises several connection attempts with an access point to be verified, it may for example be possible to attempt several times to obtain an addressing identifier of an access point, a determined number of failures to connect to an access point resulting for example in an access point considered as not belonging to the network.

In some embodiments, it may be possible, for example via a specific request of a user of the terminal 130, to force a verification of all the access points detected by a terminal.

In the embodiment shown in figure 2, the determination method 200 also comprises a selection 250 of the access point to be used by the terminal from among the access points considered as belonging to the local network. Thus, in the embodiment shown in figure 1, the selection is performed from among the access points 114 and 122.

The selection 250 can notably take account of a performance criterion for the access points belonging to the network of the terminal, and result in the selection of the access point whose performance is best (for example the one having the lowest average error rate, or the highest average bitrate).

It can also take account of a duration of association of the terminal with the access point with which it is associated at the time of the selection, for example so as not to change access point below a minimum duration of association.

In a variant, notably when the network 100 is a private network comprising several subnetworks, for example subnetworks of LAN type, the selection of an access point may take account not only of whether the access point belongs to the network 100 but also whether it belongs to a subnetwork of the network 100. This belonging can be determined for example by comparison of a complementary addressing identifier of the access point, such as a subnet mask (notably a DHCP *(Dynamic Host Configuration Protocol)* address) with a complementary addressing identifier determined (for example the DHCP address of a configuration server of the subnetwork, stored by the terminal), so as to select preferably for example an access point belonging to a particular subnetwork, having a complementary addressing identifier identical to a stored complementary addressing identifier.

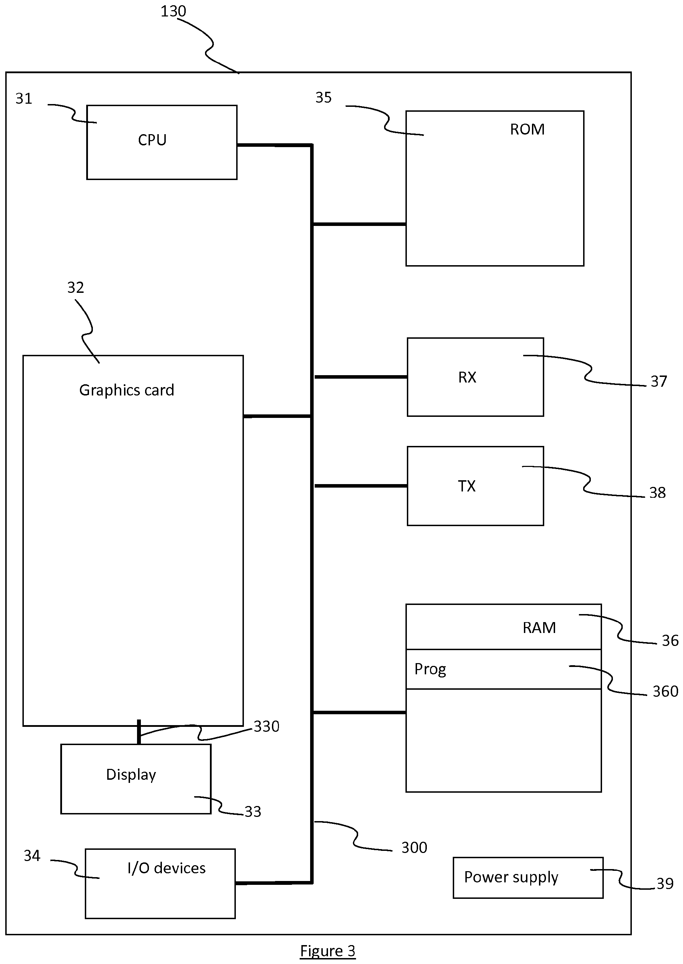

The mobile communication terminal 130 shown in figure 1 is now presented in more detail in figure 3.

**Figure 3** shows diagrammatically a hardware embodiment of the communication terminal 130 of figure 1, adapted to determine an access point to be used to access a wireless communication network.

The communication terminal 130 corresponds for example to a laptop, a tablet or a smartphone.

In the embodiment shown, the communication terminal 130 comprises the following elements, connected to each other by an address and data bus 300 which also transports a clock signal:
- a microprocessor 31 (or CPU);
- a graphics card 32;
- one or more I/O (input/output) devices 34, such as for example a keyboard, a mouse, a webcam, a microphone, etc.;
- a non-volatile memory of ROM (read only memory) type 35;
- a random access memory (RAM) 36;
- a communication interface RX 37 configured for the reception of data via a wireless (for example Wifi® or Bluetooth type) connection;
- a communication interface 38 configured for the transmission of data via a wireless (for example Wifi® or Bluetooth type) connection;
- a power supply 39.

The communication terminal 130 also comprises or is connected to a display device 33 of display screen type directly connected to the graphics card 32 by a dedicated bus 330. According to a variant, a display apparatus is external to the communication terminal 130 and is connected to the device 33 by a cable transmitting the display signals. The communication terminal 130, for example the graphics card 32, comprises a means for transmission or connector (not shown in figure 3) adapted to transmit a display signal to an external display means such as for example an LCD or plasma screen or a video projector.

It is noted that the word "register" used in the description of a memory designates in each of the memories mentioned a memory zone of low capacity (some binary data) as well as a memory zone of large capacity (enabling storage of a whole program or all or part of the data representative of data calculated or to be displayed).

When switched on, the microprocessor 31 loads and executes the instructions of the program contained in a register 360 of the RAM 36, and notably the algorithms implementing the steps of the method specific to the present disclosure and described hereafter.

According to a variant, the terminal comprises several microprocessors.

According to another variant, the power supply 39 is external to the device 6.

In particular the microprocessor is configured to determine an access point to be used to access a first communication network, said first network being a wireless communication network.

In the embodiment shown in figure 3, the microprocessor 31 can in particular be configured to:
- detect at least one access point accessible from said terminal;
- verify the belonging to said first network of at least one of the detected access points, called access point to be verified, by taking account of a reference addressing identifier, associated with said first communication network, verifying the belonging to said first network of said access point to be verified comprising requesting to obtain (230) an addressing identifier, relating to a second network, of said access point to be verified;
- select an access point to be used by said terminal from among the detected access points verified as belonging to said first communication network.

## Claims

1. Method, implemented by a communication terminal, for determining (200) at least one access point usable by said communication terminal for accessing a first wireless communication network, said method comprising:
- for at least one detected access point, obtaining (230) an address, relating to a second network, of said detected access point, said second network being another network than said first network;
- determining said at least one usable access point by taking account of at least one of said obtained address.

2. Method according to claim 1 **characterized in that**:
- said method comprises storing, in said communication terminal, an indicator representative of a belonging to said first network of said detected access point, said indicator taking account of said obtained address; and
- said determining of said at least one usable access point takes into account at least one of said stored indicator.

3. Method according to claim 1 or 2, **characterized in that** said belonging to said first network of said detected access point is verified by taking account of said obtained address and of a first address associated with said first communication network.

4. Method according to claim 3 **characterized in that** it comprises obtaining said first address via a first access point known to said communication terminal as belonging to said first communication network.

5. Method according to any of claims 2 to 4 **characterized in that** said belonging is verified only for access points detected for a first time by said communication terminal.

6. Communication terminal, comprising at least one processor configured for determining at least one access point usable by said communication terminal for accessing a first wireless communication network, said communication terminal being **characterized in that** said at least one processor is configured for:
- obtaining (230), for at least one detected access point, an address, relating to a second network, of said detected access point, said second network being another network than said first network;
- determining said at least one usable access point by taking account of at least one of said obtained address.

7. Communication terminal according to claim 6 **characterized in that**:
- said at least one processor is configured for storing, in said communication terminal, an indicator representative of a belonging to said first network of said detected access point, said indicator taking account of said obtained address; and
- said determining of said at least one usable access point takes into account at least one of said stored indicator.

8. Communication terminal according to claim 7 **characterized in that** said belonging to said first network of said detected access point is verified by taking account of said obtained address and of a first address associated with said first communication network.

9. Communication terminal according to claim 8 **characterized in that** said at least one processor is configured for obtaining said first address via a first access point known to said communication terminal as belonging to said first communication network.

10. Communication terminal according to claim 8 or 9 or method according to claim 3 to 5 **characterized in that** said stored indicator comprises an identifier of said detected access point and is stored when said obtained address is equal to said first address, and said determining of said usable access point takes into account a presence of an identifier of said usable access point in said stored identifiers.

11. Communication terminal according to any of claims 7 to 10 or method according to any of claims 2 to 5 or 10 **characterized in that** said stored indicator is a value allocated to at least one bit of an item of information stored in said communication terminal in association with each detected access point.

12. Communication terminal according to any of claims 7 to 11 **characterized in that** said at least one processor is configured for verifying said belonging only for access points detected for a first time by said communication terminal.

13. Communication terminal according to any of claims 7 to 12 **characterized in that** said at least one processor is configured for, or method according to any of claims 2 to 5 or 10 or 11 **characterized in that** said method comprises, upon a request from a user interface of the communication terminal, verifying the belonging to said first network of all the access points detected by said communication terminal.

14. Computer program, **characterized in that** it comprises program code instructions for executing, when said program is executed by at least one processor of a communication terminal, a method for determining at least one access point usable by said communication terminal for accessing a first wireless communication network, said method comprising:
- for at least one detected access point, obtaining an address, relating to a second network, of said detected access point, said second network being another network than said first network;
- determining said at least one usable access point by taking account of at least one of said obtained address.

15. A computer-readable storage medium on which is saved a computer program comprising program code instructions for executing, by at least one processor of a communication terminal, a method for determining at least one access point usable by said communication terminal for accessing a first wireless communication network, said method comprising:
- for at least one detected access point, obtaining an address, relating to a second network, of said detected access point, said second network being another network than said first network;
- determining said at least one usable access point by taking account of at least one of said obtained address.

## Patentansprüche

1. Verfahren, eingesetzt von einem Kommunikationsendgerät, zum Bestimmen (200) von zumindest einem Zugriffspunkt, nutzbar für das erwähnte Kommunikationsendgerät zum Zugriff auf ein erstes drahtloses Kommunikationsnetz, wobei das erwähnte Verfahren umfasst:
- für zumindest einen erfassten Zugriffspunkt, Erhalt (230) einer Adresse in Verbindung mit einem zweiten Netz des erwähnten erfassten Zugriffspunkts, wobei dieses zweite Netz ein anderes ist als das erwähnte erste Netz;
- Bestimmen des erwähnten zumindest einen nutzbaren Zugriffspunkts unter Berücksichtigung von zumindest einer erwähnten erhaltenen Adresse.

2. Verfahren nach Anspruch 1, **dadurch gekennzeichnet, dass**:
- das erwähnte Verfahren das Speichern eines Indikators in dem erwähnten Kommunikationsendgerät umfasst, eines Indikators, der die Zugehörigkeit zu dem erwähnten ersten Netz des erwähnten erfassten Zugriffspunkts anzeigt, wobei der erwähnte Indikator diese erwähnte erhaltene Adresse berücksichtigt; und
- das erwähnte Bestimmen des erwähnten zumindest einen nutzbaren Zugriffspunkts zumindest einen erwähnten gespeicherten Indikator berücksichtigt.

3. Verfahren nach Anspruch 1 oder 2, **dadurch gekennzeichnet, dass** die erwähnte Zugehörigkeit zu dem erwähnten ersten Netz des erwähnten erfassten Zugriffspunkts überprüft wird, unter Berücksichtigung der erwähnten erhaltenen Adresse und einer ersten, mit dem erwähnten ersten Kommunikationsnetz in Verbindung stehenden Adresse.

4. Verfahren nach Anspruch 3, **dadurch gekennzeichnet, dass** es den Erhalt der erwähnten ersten Adresse über einen ersten Zugriffspunkt umfasst, von dem das erwähnte Kommunikationsendgerät Kenntnis hat, dass er zum ersten Kommunikationsnetz gehört.

5. Verfahren nach einem der Ansprüche 2 bis 4, **dadurch gekennzeichnet, dass** die erwähnte Zugehörigkeit nur für Zugriffspunkte überprüft wird, die zum ersten Mal von dem erwähnten Kommunikationsendgerät erfasst werden.

6. Kommunikationsendgerät, umfassend zumindest einen Prozessor, konfiguriert zum Bestimmen von zumindest einem Zugangspunkt, der von dem erwähnten Kommunikationsendgerät zum Zugriff auf ein erstes drahtloses Kommunikationsnetz genutzt werden kann, wobei das erwähnte Kommunikationsendgerät **dadurch gekennzeichnet ist, dass** der erwähnte einzelne Prozessor konfiguriert ist für:
- Erhalt (230), für zumindest einen erfassten Zugriffspunkt, einer Adresse in Verbindung mit einem zweiten Netz des erwähnten erfassten Zugriffspunkts, wobei das erwähnte zweite Netz ein anderes Netz als das erwähnte erste Netz ist;
- Bestimmen des erwähnten zumindest einen nutzbaren Zugriffspunkts, unter Berücksichtigung von zumindest einer erwähnten erhaltenen Adresse.

7. Kommunikationsendgerät nach Anspruch 6, **dadurch gekennzeichnet, dass**
- der erwähnte zumindest einzelne Prozessor zum Speichern eines Indikators in dem erwähnten Kommunikationsendgerät konfiguriert ist, wobei der erwähnte Indikator die Zugehörigkeit zu dem erwähnten ersten Netz des erwähnten erfassten Zugriffspunkts anzeigt, unter Berücksichtigung dieser empfangenen Adresse; und
- das erwähnte Bestimmen des erwähnten zumindest einen nutzbaren Zugriffspunkts zumindest einen erwähnten gespeicherten Indikator berücksichtigt.

8. Kommunikationsendgerät nach Anspruch 7, **dadurch gekennzeichnet, dass** die erwähnte Zugehörigkeit zu dem erwähnten ersten Netz des erwähnten erfassten Zugriffspunkts unter Berücksichtigung der erwähnten erhaltenen Adresse und einer ersten Adresse überprüft wird, in Verbindung mit dem erwähnten ersten Kommunikationsnetz.

9. Kommunikationsendgerät nach Anspruch 8, **dadurch gekennzeichnet, dass** der zumindest einzelne Prozessor dazu konfiguriert ist, die erwähnte erste Adresse zu erhalten, sowie einer ersten Adresse in Verbindung mit dem erwähnten ersten Kommunikationsnetz.

10. Kommunikationsendgerät nach Anspruch 8 oder 9 bzw. Verfahren nach einem der Ansprüche 3 bis 5, **dadurch gekennzeichnet, dass** der erwähnte gespeicherte Indikator eine Kennung des erwähnten erfassten Zugriffspunkts umfasst und gespeichert wird, wenn die so erhaltene erwähnte Adresse identisch mit der erwähnten ersten Adresse ist, und die erwähnte Bestimmung des erwähnten nutzbaren Zugriffspunkts das Vorhandensein einer Kennung für den erwähnten nutzbaren Zugriffspunkt in den erwähnten gespeicherten Kennungen berücksichtigt.

11. Kommunikationsendgerät nach einem der Ansprüche 7 bis 10 bzw. Verfahren nach einem der Ansprüche 2 bis 5 oder 10, **dadurch gekennzeichnet, dass** der erwähnte gespeicherte Indikator ein zu mindestens einem Bit eines Informationselements zugeordneter Wert ist, gespeichert in dem erwähnten Kommunikationsendgerät in Verbindung mit jedem erfassten Zugriffspunkt.

12. Kommunikationsendgerät nach einem der Ansprüche 7 bis 11, **dadurch gekennzeichnet, dass** der zumindest eine Prozessor konfiguriert ist zum Überprüfen der erwähnten Zugehörigkeit nur für Zugriffspunkte, die ein erstes Mal von dem erwähnten Kommunikationsendgerät erfasst werden.

13. Kommunikationsendgerät, nach einem der Ansprüche 7 bis 12, **dadurch gekennzeichnet, dass** der zumindest eine Prozessor dafür konfiguriert ist, oder das Verfahren nach einem der Ansprüche 2 bis 5 oder 10 oder 11, oder **dadurch gekennzeichnet, dass** die erwähnte Methode umfasst, auf Anforderung von einer Benutzerschnittstelle des Kommunikationsendgeräts die Zugehörigkeit des erwähnten ersten Netzes aller von erwähntem Kommunikationsendgerät erfassten Zugriffspunkte zu überprüfen.

14. Computerprogramm, **dadurch gekennzeichnet, dass** es Programmcodeanweisungen umfasst, wenn das erwähnte Programm von zumindest einem Prozessor eines Kommunikationsendgeräts ausgeführt wird, zur Ausführung eines Verfahrens zum Bestimmen von zumindest einem von dem erwähnten Kommunikationsendgerät nutzbarem Zugriffspunkt zum Zugriff auf ein erstes drahtloses Kommunikationsnetz, wobei das erwähnte Verfahren umfasst:
- Empfang einer Adresse für zumindest einen erfassten Zugriffspunkt mit Verbindung zu einem zweiten Netz des erwähnten erfassten Zugriffspunkts, wobei das erwähnte zweite Netz ein anderes Netz ist als das erwähnte erste Netz;
- Bestimmen des erwähnten zumindest einen nutzbaren Zugriffspunkts unter Berücksichtigung von zumindest einer erwähnten empfangenen Adresse.

15. Computerlesbares Speichermedium, auf dem ein Computerprogramm mit Programmcodeanweisungen gespeichert ist, zum Ausführen eines Bestimmungsverfahrens für zumindest einen Zugriffspunkt durch zumindest einen Prozessor eines Kommunikationsendgeräts, nutzbar von dem erwähnten Kommunikationsendgerät zum Zugriff auf ein erstes drahtloses Kommunikationsnetz, wobei das erwähnte Verfahren umfasst:
- für zumindest einen erfassten Zugriffspunkt, Empfang einer Adresse in Zusammenhang mit einem zweiten Netz des erwähnten erfassten Zugriffspunkts, wobei das erwähnte zweite Netz ein anderes Netz als das erste Netz ist;
- Bestimmen des erwähnten zumindest einen nutzbaren Zugriffspunkts durch Berücksichtigung von zumindest einer erwähnten empfangenen Adresse.

## Revendications

1. Procédé, mis en oeuvre par un terminal de communication, pour déterminer (200) au moins un point d'accès utilisable par ledit terminal de communication pour accéder à un premier réseau de communication sans fil, ledit procédé comprenant :
- pour au moins un point d'accès détecté, obtention (230) d'une adresse, relative à un deuxième réseau, dudit point d'accès détecté, ledit deuxième réseau étant un réseau différent dudit premier réseau ;
- détermination dudit au moins un point d'accès utilisable en tenant compte d'au moins une de ladite adresse obtenue.

2. Procédé selon la revendication 1, **caractérisé en ce que** :
- ledit procédé comprend un stockage, dans ledit terminal de communication, d'un indicateur représentatif d'une appartenance audit premier réseau dudit point d'accès détecté, ledit indicateur tenant compte de ladite adresse obtenue ; et
- ladite détermination dudit au moins un point d'accès utilisable tient compte d'au moins un dudit indicateur stocké.

3. Procédé selon la revendication 1 ou 2, **caractérisé en ce que** ladite appartenance audit premier réseau dudit point d'accès détecté est vérifiée en tenant compte de ladite adresse obtenue et d'une première adresse associée audit premier réseau de communication.

4. Procédé selon la revendication 3, **caractérisé en ce qu'**il comprend une obtention de ladite première adresse via un premier point d'accès connu auprès dudit terminal de communication comme appartenant audit premier réseau de communication.

5. Procédé selon l'une quelconque des revendications 2 à 4, **caractérisé en ce que** ladite appartenance est vérifiée uniquement pour les points d'accès détectés pour la première fois par ledit terminal de communication.

6. Terminal de communication, comprenant au moins un processeur configuré pour déterminer au moins un point d'accès utilisable par ledit terminal de communication pour accéder à un premier réseau de communication sans fil, ledit terminal de communication étant **caractérisé en ce que** ledit au moins un processeur est configuré pour :
- obtenir (230), pour au moins un point d'accès détecté, une adresse, relative à un deuxième réseau, dudit point d'accès détecté, ledit deuxième réseau étant un réseau différent dudit premier réseau ;
- une détermination dudit au moins un point d'accès utilisable en tenant compte d'au moins une de ladite adresse obtenue.

7. Terminal de communication selon la revendication 6, **caractérisé en ce que** :
- ledit au moins un processeur est configuré pour stocker, dans ledit terminal de communication, un indicateur représentatif d'une appartenance audit premier réseau dudit point d'accès détecté, ledit indicateur tenant compte de ladite adresse obtenue ; et
- ladite détermination dudit au moins un point d'accès utilisable tient compte d'au moins un dudit indicateur stocké.

8. Terminal de communication selon la revendication 7, **caractérisé en ce que** ladite appartenance audit premier réseau dudit point d'accès détecté est vérifiée en tenant compte de ladite adresse obtenue et d'une première adresse associée audit premier réseau de communication.

9. Terminal de communication selon la revendication 8, **caractérisé en ce que** ledit au moins un processeur est configuré pour obtenir ladite première adresse via un premier point d'accès connu auprès dudit terminal de communication comme appartenant audit premier réseau de communication.

10. Terminal de communication selon la revendication 8 ou 9 ou procédé selon la revendication 3 ou 5 **caractérisé en ce que** ledit indicateur stocké comprend un identifiant dudit point d'accès détecté et est stocké lorsque ladite adresse obtenue est égale à ladite première adresse, et ladite détermination dudit point d'accès utilisable tient compte d'une présence d'un identifiant dudit point d'accès utilisable dans lesdits identifiants stockés.

11. Terminal de communication selon l'une quelconque des revendications 7 à 10 ou procédé selon l'une quelconque des revendications 2 à 5 ou 10 **caractérisé en ce que** ledit indicateur stocké est une valeur allouée à au moins un bit d'un élément d'information stocké dans ledit terminal de communication en association avec chaque point d'accès détecté.

12. Terminal de communication selon l'une quelconque des revendications 7 à 11, **caractérisé en ce que** ledit au moins un processeur est configuré pour vérifier ladite appartenance uniquement pour les points d'accès détectés pour la première fois par ledit terminal de communication.

13. Terminal de communication selon l'une quelconque des revendications 7 à 12 **caractérisé en ce que** ledit au moins un processeur est configuré pour, ou procédé selon l'une quelconque des revendications 2 à 5 ou 10 ou 11 **caractérisé en ce que** ledit procédé comprend, sur demande d'une interface utilisateur du terminal de communication, une vérification de l'appartenance audit premier réseau de tous les points d'accès détectés par ledit terminal de communication.

14. Programme informatique, **caractérisé en ce qu'**il comprend des instructions de code de programme pour exécuter, lorsque ledit programme est exécuté par au moins un processeur d'un terminal de communication, un procédé pour déterminer au moins un point d'accès utilisable par ledit terminal de communication pour accéder à un premier réseau de communication sans fil, ledit procédé comprenant :
- pour au moins un point d'accès détecté, une obtention d'une adresse, relative à un deuxième réseau, dudit point d'accès détecté, ledit deuxième réseau étant un réseau différent dudit premier réseau ;
- une détermination dudit au moins un point d'accès utilisable en tenant compte d'au moins une de ladite adresse obtenue.

15. Support de stockage lisible sur ordinateur sur lequel est enregistré un programme informatique comprenant des instructions de code de programme pour l'exécution, par au moins un processeur d'un terminal de communication, d'un procédé pour déterminer au moins un point d'accès utilisable par ledit terminal de communication pour accéder à un premier réseau de communication sans fil, ledit procédé comprenant :
- pour au moins un point d'accès détecté, une obtention d'une adresse, relative à un deuxième réseau, dudit point d'accès détecté, ledit deuxième réseau étant un réseau différent dudit premier réseau ;
- une détermination dudit au moins un point d'accès utilisable en tenant compte d'au moins une de ladite adresse obtenue.
